# EUROPEAN PATENT APPLICATION

(11) **EP 4 737 710 A1**
(43) Date of publication of application: **06.05.2026**
(21) Application number: 24383202.9
(22) Date of filing: 04.11.2024
(51) Int. Cl.: F03D 7/02, F03D 80/40

(54) **WIND TURBINE, CONTROL SYSTEM, AND METHOD OF OPERATING A WIND TURBINE UNDER POTENTIAL ICING CONDITIONS TO PREVENT VIBRATIONS**

(71) Applicant: Siemens Gamesa Renewable Energy Innovation & Technology S.L., 31621 Sarriguren (Navarra) (ES)
(72) Inventor: Holm-Joergensen, Kristian, 7100 Vejle (DK); Garcia Andujar, Juan Carlos, 28017 Madrid (ES)
(74) Representative: SGRE-Association

(57) **Abstract**

Wind turbine, control system, and method of operating a wind turbine (1) under potential icing conditions to reduce vibrations during idling or standstill operation, comprising: determining a potential icing condition for one or more blades (2,3,4), establishing a danger zone (10) where the falling of ice is to be avoided, identifying a risk of falling ice within the danger zone (10, wherein if a risk of falling ice in the danger zone (10) is identified, the method comprises: a) setting a pitch angle (P) of a first rotor blade (2) close to 0°, wherein a one or more further blades (3,4) comprise a pitch angle (P) differing by at least 30° from the first rotor blade (2); and b) adjusting the rotor yaw orientation (W) away from the danger zone (10).

## Description

### OBJECT OF THE INVENTION

The present invention relates to methods of operating a wind turbine under potential icing conditions, particularly for preventing or reducing vibrations in wind turbines, during such icing conditions. The object of the present invention addresses the operational challenges associated with ice accumulation on rotor blades during idling or standstill operation and the mitigation of risks associated with falling ice, and the enhancement of damping properties to prevent aeroelastic instabilities during said icing conditions.

### BACKGROUND OF THE INVENTION

In the field of wind turbine operation under icing conditions, there are known methods for detecting potential ice formation on turbine blades and implementing corrective actions to mitigate associated risks. Existing solutions often involve monitoring ambient temperature and other environmental factors to predict icing conditions. Some methods adjust the pitch of the blades to reduce aerodynamic loads and prevent ice accumulation or readapt the pitch angle to adapt the operation to the aerodynamic profile changed by the ice accretion.

However, these known methods do not specifically address the dual challenges of enhancing aeroelastic stability during icing conditions in standstill or idling operation, and simultaneously allowing the wind rotor blades to deice while avoiding danger zones where falling ice poses a significant risk.

Additionally, the presence of low ambient temperature, among other effects, may increase the power injected by the wind due to higher air density, and reduce structure capacity to dissipate injected power, specifically in blades due to composites structures tendency to reduce structural damping with lower temperature, further increasing the risk of different types of stand still turbine aeroelastic instabilities.

Thus, there is an urgent need for a solution that efficiently attenuates and mitigates oscillations due to aeroelastic instabilities by increasing damping under icing conditions, while also allowing the rotor blades to safely deice and generally falling of ice without posing risks to surrounding areas.

### DESCRIPTION OF THE INVENTION

The present invention pertains to a method for preventing, reducing or avoiding vibrations in a wind turbine under potential icing conditions. This method is particularly effective during idling or standstill operation, where the risk of ice accretion on the rotor blades is high, leading to operational challenges such as increased vibrations due to decreased damping during icing and low ambient temperature conditions, and the potential danger of falling ice.

In one embodiment, the method involves determining the potential for ice formation on one or more blades of the rotor. This determination may be based on monitoring ambient temperature or other relevant environmental conditions, such as humidity and wind speed, which could indicate the likelihood of ice accumulation. Sensors on the blades may be utilized to detect the presence of ice directly or to monitor conditions conducive to icing, thereby allowing for an early and accurate identification of potential risks.

Once a potential icing condition is identified, the method may further involve establishing a danger zone. The danger zone is defined as an area surrounding the wind turbine where falling ice is to be avoided, particularly where it may pose a risk to personnel, equipment, or infrastructure.

In some embodiments, the danger zone may be determined based on the presence of fixed structures such as buildings or other permanent infrastructure. Alternatively, the danger zone could be dynamically determined based on real-time factors such as the presence of personnel or movable assets near the wind turbine. This dynamic determination allows the method to adapt to changing conditions, ensuring that the defined danger zone is always relevant to the current operational context.

The method may also include identifying a risk of falling ice within the established danger zone. This assessment may be based on the identified potential icing condition in combination with the rotor's yaw orientation relative to the danger zone. If it is determined that the default standstill or idling operational mode is unsuitable due to the risk of falling ice in the danger zone, the method may involve adjusting the rotor configuration to reduce or eliminate this risk.

In some embodiments, the rotor configuration is altered by setting the pitch angle of a first rotor blade close to 0°, typically within a range of -25° to 25°. One or more of the remaining blades may be adjusted to have a pitch angle that differs by at least 30° from the first blade, with a preferred difference of at least 40°. Optionally, these further blades may have a pitch angle close to 90° or -90°, within a range of 75° to 105° or -105° to -75°. This specific rotor configuration (or range of possible rotor configurations) has been unexpectedly identified as providing enhanced stability when ice is present on the blades and/or when temperatures are on icing conditions or bellow, especially in terms of improved aeroelastic damping, which is beneficial for reducing vibrations across a wide range of wind directions. This approach is particularly advantageous when the wind rotor is not oriented perpendicular to the wind flow with all the blades in a feathered position, which is the typical default idling or standstill operational mode.

An important aspect of this invention is the understanding of how temperature influences the damping properties of wind turbine blades, particularly under icing conditions. It has been observed that as temperature decreases, the structural damping of the materials used in wind turbine blades often composite materials-also decreases. This reduction in damping is especially pronounced at low temperatures, which are commonly associated with icing conditions. A significant decrease in structural damping can occur as temperatures drop from 15°C to -10°C, with potential reductions of up to 50%.

The impact of icing on blade aerodynamics further exacerbates this issue. The presence of ice on the blades not only reduces aerodynamic efficiency but also diminishes aeroelastic damping, leading to an increased risk of aeroelastic instabilities, such as vortex-induced vibrations (ViV) and stall-induced vibrations (SiV). These instabilities can result in dangerous oscillations, especially when the wind turbine is in a standstill or idling condition.

In a preferred embodiment, the first rotor blade being adjusted to a pitch angle close to 0°, may also be the rotor blade positioned at the highest point of the wind rotor (9) in its rotational plane. This has been found to further increase damping over a wide range of wind directions (under an envelope of wind directions) in relation to the yawed wind rotor during deicing.

In particular in a wind rotor consisting of three blades (2,3,4), if two rotor blades (2,3,4) are positioned at approximately the same height, forming a 'Y' shape, the first rotor blade (2) refers to either of these two upper rotor blades. Note that once the wind blade is pitched to a pitch angle close to 0°, that blade may be the blade located at the highest point because the adjacent blade would be at a pitch angle close to 90° then at a slightly inferior height. Notwithstanding, for clarity and easiness in the interpretation, the first rotor blade may refer to either of these two upper rotor blades when in a 'Y' configuration (or also called "bunny configuration").

The proposed rotor configuration, and/or range of rotor configurations as defined, have been found to deliver effective results throughout a wide range of wind directions during icing conditions increasing damping thereof. The configuration where one blade is pitched close to 0°, and the others are set at differing angles close to 90° or -90° has been found to be effective in maintaining medium to high levels of aeroelastic damping under icing conditions. This configuration stabilizes the rotor against the oscillations caused by reduced damping at low temperatures. However, this solution introduces a synergistic effect: while the proposed rotor configuration effectively reduces vibrations and enhances stability during low temperature conditions, it can lead to a faster falling of ice from the blades, posing a risk to the established danger zones. Note that, during conventional approaches such as pitching all blades to a substantially feathered position, with all the blades at 90°, the possibility of snow accumulation and ice accretion is higher as a larger surface is exposed. With this configuration, at least one blade is pitched essentially close to 0°, therefore, there may be less ice accretion but ice may fall at a different rate and quicker. Therefore, a synergistic approach to avoid danger of ice falling of the blades while at this rotor configuration may be further necessary.

Additionally, this configuration may only be required or advantageous when the default rotor configuration (e.g., with all blades feathered and the rotor oriented perpendicular to the wind flow) cannot be set due to the risk of ice falling on a danger zone if perpendicularly oriented to the wind.

This necessity may depend on the wind direction and further dependent on the position of permanent structures and/or personnel associated with specific service labors or timings, which should be dynamically assessed.

In other words, depending on the surroundings (infrastructure, personnel, vehicles, inter alia) and the wind direction, it may be undesirable to operate the wind turbine with the wind rotor yawed perpendicular to the wind direction and all the blades in feathered position (In the default standstill mode), because ice may fall on infrastructure or personnel. If the rotor is yawed out to a safe zone, vibrations are expected to surpass allowable thresholds as the wind flow is projecting laterally. This situation is even worsened by ice conditions wherein the damping can decrease even 50% as aforementioned. Under these circumstances, it has been surprisingly found by the present invention that the proposed rotor configurations can safely endure a wide range of wind directions (not perpendicular to wind rotor) under icing conditions and maintain vibrations under allowable thresholds.

Moreover, to address the issue of ice shedding onto danger zones, despite the effective vibration control under icing conditions provided by the rotor configuration, the method may incorporate a dynamic yaw adjustment strategy. In some embodiments, after configuring the rotor blades to the optimal pitch angles to enhance damping, the method may further involve reorienting the rotor's yaw away from the danger zone or toward a safe zone. The safe zone is defined as an area where falling ice poses no significant risk to personnel, equipment, or infrastructure.

The turbine may remain in this yaw orientation until it is confirmed that the rotor blades are substantially deiced, thereby mitigating the risk of falling ice. The method also includes flexibility in the sequence of operations, allowing for the pitch angle adjustment and yaw reorientation to be performed in any order, depending on the specific requirements of the situation.

In conclusion, the invention provides a comprehensive and adaptive method for managing the dual challenges of vibration control and ice shedding in wind turbines under icing conditions. By combining a specific rotor configuration as proposed, with dynamic yaw control, the method reduces vibrations and enhances stability while ensuring the safety of surrounding areas. It could also be used when service or construction personnel are performing some labor, and the wind turbine must be yawed towards a safe zone so that ice falling is controlled towards a safe zone without prejudicing vibrations.

Additionally, the invention may be implemented in existing wind turbines through a control system configured to carry out the method, offering a practical and adaptable solution for enhancing the safety and stability of wind turbines in icing conditions. This system can be retrofitted to current turbine models, thereby extending the operational life of existing assets while improving safety and reliability in cold climate environments.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- shows a wind turbine in its default standstill mode, where the wind flow, aligned with the X-axis, is coming perpendicular to the wind rotor, and the rotor blades are positioned in a feathered configuration parallel to the wind.
Figure 2.- shows an embodiment of the present invention depicting the wind turbine after it has been reoriented to a safe zone, and one of the rotor blades is set to a pitch angle (P) close to 0° to prevent vibrations throughout an envelope of wind directions, said wind directions being different to a wind flow perpendicular to the wind rotor such as in Figure 1.
Figure 3.- shows a flowchart of an exemplary embodiment of the method of operating the wind turbine under icing conditions for preventing vibrations according to the present invention.

### PREFERRED EMBODIMENT OF THE INVENTION

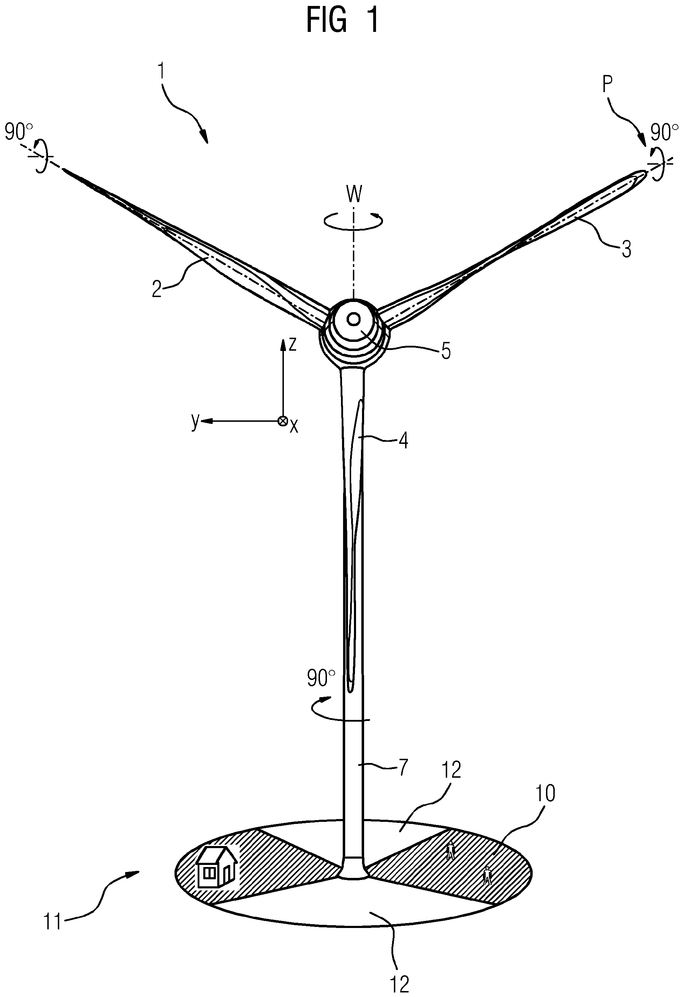

Figure 1 illustrates a wind turbine (1) in its default standstill mode, where the wind flow is coming perpendicular to the rotor, aligned with the X-axis. In this configuration, all rotor blades (2, 3, 4) are typically in a feathered position, meaning their pitch angles (P) are set to minimize aerodynamic loads, thereby reducing the risk of unwanted rotation or vibrations when the turbine is not actively generating power to the grid. The yaw orientation (W) of the nacelle (5) is positioned to face the oncoming wind directly, which is a standard approach in idling or standstill operations with the blades pitch angle (P) parallel to the wind (P=90°) to maintain structural stability and prevent damage.

This default mode is particularly relevant under potential icing conditions, which are identified by monitoring various environmental factors such as ambient temperature, humidity, and wind speed and/or by sensors to detect ice accretion. When these factors indicate a high likelihood of ice accumulation on the blades, the wind turbine may typically remain in this standstill or idling mode to minimize the risks associated with continued operation. However, as the turbine continues to face the wind, there is a risk that any ice formed on the blades (2,3,4) could fall into surroundings (11) areas around the wind turbine (1) -designated as danger zones (10)- where it could pose risks to personnel or infrastructure. Safe zones (12) are defined as areas where falling ice poses no significant risk. In particular, such safe zones (12) could change dynamically (in relation to moving personal or vehicles) or could be safe zones (12) defined by fixed infrastructure surrounding the wind turbine (1) .

The determination of potential icing conditions triggers further assessment in the method to decide whether maintaining the turbine in this default standstill or idling mode is appropriate or if adjustments need to be made to reduce the risk of falling ice.

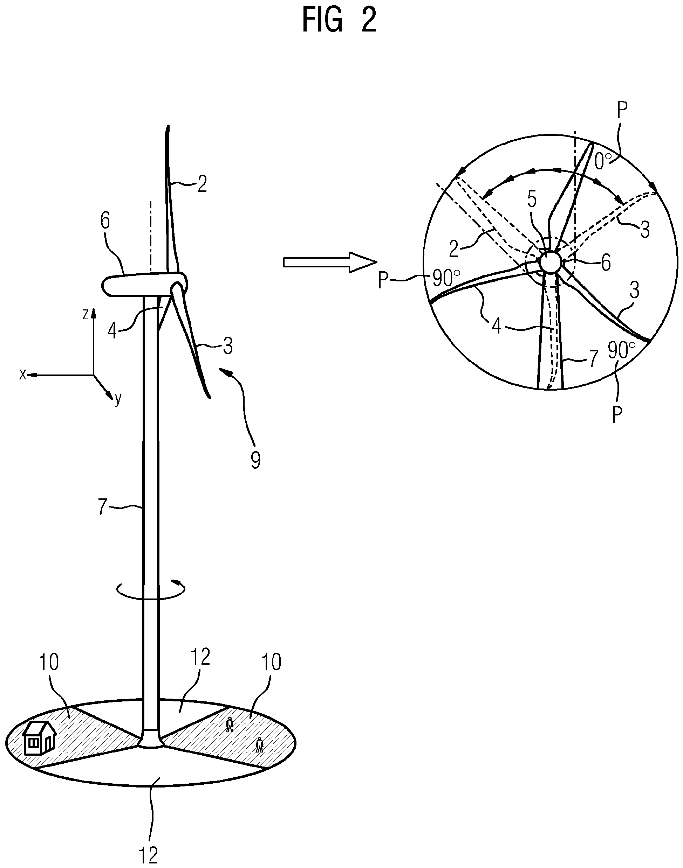

More specifically, Figure 2 shows the wind turbine (1) after it has been reoriented 90° relative to the wind flow, altering the rotor's alignment to reduce the risks associated with ice shedding. This adjustment is made based on the method's assessment that the default standstill or idling mode, with all blades (2,3,4) in feathered position, as shown in Figure 1, is unsuitable due to the potential risk of ice falling into a danger zone (10).

Furthermore, because the wind rotor (9) is forced out of the perpendicular orientation in respect of the wind, one of the rotor blades (2) is set to a pitch angle (P) close to 0°, typically within the range of -25° to 25°. The remaining two blades (3, 4) remain in their feathered positions, with pitch angles (P) close to 90° or -90°, within specified ranges (75° to 105° or -105° to -75°). This configuration has been found to prevent vibrations even more during icing temperatures and with ice accretion accumulating on the blade. It has been found that this blade positioning enhances aeroelastic damping specially in icing conditions, and specifically convenient for a wide range of wind directions relative to the wind rotor (9), i.e., when the rotor is not set to be perpendicular to the wind flow and the feathered blades are completely parallel to the wind flow.

In addition, by yawing the wind turbine (1) so that the nacelle (5) is no longer directly facing the wind, the method redirects any ice that may shed from the blades away from the identified danger zones while simultaneously maintaining an allowable vibration threshold even for a wide range of different wind directions (i.e. across the envelope), none of which perpendicular to the wind rotor (9).

The method's adjustment of the yaw orientation (W) away from the wind flow, and correspondent pitch angles, not only reduces the vibrations but also steers any potential ice shedding into a safe zone (12). This orientation is maintained until conditions improve, such as when the rotor blades are substantially deiced, to ensure safety and minimize vibration risks.

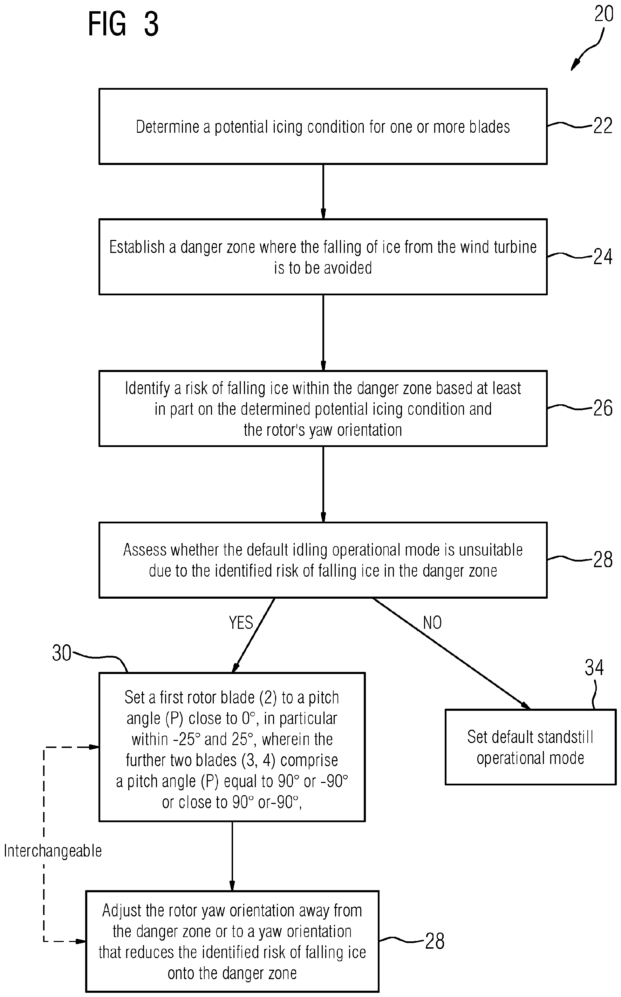

Figure 3 depicts a flowchart of an exemplary embodiment of the method (20) of operating the wind turbine (1) under icing conditions for preventing vibrations according to the present invention.

More specifically, in step (22), the method (20) comprises determining the potential for ice formation on one or more blades (2, 3, 4) of the wind turbine (1). This step involves monitoring environmental conditions such as ambient temperature, humidity, wind speed, and/or other factors that could indicate an increased likelihood of icing. The use of sensors placed on the blades or within the nacelle (6) may further allow for direct detection of ice accumulation or conditions conducive to potential icing condition. The determining of the potential ice formation may consist of only monitoring temperature.

In step (24), once a potential icing condition is identified, the method proceeds to establish a danger zone (10). The danger zone (10) is defined as the area around the wind turbine where the falling of ice is to be avoided, particularly where it could pose a risk to personnel, equipment, or infrastructure. This zone may be fixed, based on permanent structures like buildings, or dynamically determined using real-time data on the presence of movable assets or personnel near the turbine.

In step (26), the method includes identifying a risk of falling ice within the established danger zone (10). This assessment considers the potential icing condition determined in step (22) along with the rotor's current yaw orientation (W) relative to the danger zone. If the assessment reveals a significant risk of ice falling into the danger zone (10), the method advances to further actions.

In step (28), the method assesses whether the default standstill or idling operational mode, where the wind rotor (9) is typically feathered and the nacelle (6) faces the wind, is suitable given the identified risk. If this mode is found to be unsuitable due to the risk of falling ice, the method proceeds to adjust the rotor configuration.

In step (30), the method involves adjusting the rotor blade configuration. Specifically, one rotor blade (2) is set to a pitch angle (P) close to 0°, typically within the range of - 25° to 25°. The other blades (3, 4) are kept in their feathered positions, with pitch angles (P) close to 90° or - 90°. This configuration is designed to enhance aeroelastic damping, thereby reducing the risk of vibrations that could lead to structural damage or operational hazards.

In step (32), following the rotor blade adjustment, the method includes adjusting the rotor's yaw orientation (W) to move it away from the danger zone (10) or to another yaw orientation that minimizes the risk of ice falling onto the danger zone. The objective here is to align the rotor such that any ice that sheds will fall into a safe zone (12), where it poses no significant risk to surrounding areas.

Finally, in step (34), if the earlier assessment (step 28) determined that the default standstill or idling operational mode is suitable, or once the danger from ice has passed (e.g., the blades have been deiced), the turbine may return to its default idling or standstill mode. This involves resetting the rotor blades (2,3,4) to their feathered positions and reorienting the nacelle (6) to face the wind, as depicted in Figure 1.

While the example method illustrates a specific sequence of operations/steps, it should be understood that the sequence may be modified without departing from the scope of the present disclosure. For instance, certain operations, such as steps (30) and (32), may be performed concurrently or in a different order that does not materially impact the overall function of the method (20). Additionally, various components of an example device, wind turbine, or control system implementing the method may carry out their respective functions either simultaneously or in a particular sequence as necessary.

## Claims

1. A method (20) of operating a wind turbine (1) under potential icing conditions to reduce vibrations during idling or standstill operation, the method (20) comprising:
determining a potential icing condition for one or more blades (2,3,4) of a wind rotor (9) of the wind turbine (1),
establishing a danger zone (10), said danger zone (10) being an area where the falling of ice from the wind turbine (1) is to be avoided,
identifying a risk of falling ice within the danger zone (10) based at least in part on the determined potential icing condition and the rotor's yaw orientation (W),
wherein if a risk of falling ice in the danger zone (10) is identified, the method further comprises:
a) setting a pitch angle (P) of a first rotor blade (2) close to 0°, in particular within -25° and 25°, and wherein a one or more further blades (3,4) comprise a pitch angle (P) differing by at least 30° from the first rotor blade (2), in particular by at least 40°, and/or wherein the further blades (3,4) comprise a pitch angle (P) equal to 90° or -90° or close to 90° or -90°, in particular within a range of 75° to 105° or -105° to -75°, and
b) adjusting the rotor yaw orientation (W) away from the danger zone (10) or to a yaw orientation (W) that reduces the identified risk of falling ice onto the danger zone (10).

2. The method (20) according to claim 1, wherein the sequence of executing steps a) and b) is interchangeable.

3. - The method (20) according to claim 1 or 2, further comprising assessing whether a default idling operational mode is unsuitable due to the identified risk of falling ice in the danger zone (10), and if assessed as unsuitable, then executing steps a) and b) in either sequence.

4. The method (20) of claim 3, wherein the default idling operational mode comprises adjusting the rotor yaw orientation (W) such that the wind rotor (9) is oriented substantially perpendicular to the wind flow, with all the blades (2,3,4) in a substantially feathered position with a pitch angle (P) equal to 90° or -90° or close to 90° or -90°, in particular within a range of 75° to 105° or -105° to -75°.

5. The method (20) according to claim 1 or 4, wherein the potential icing condition is determined based at least in part on ambient temperature.

6. The method (20) according to any one of claims 1 to 5, wherein the danger zone (10) is a fixed area established at least in part by the presence of permanent structures, in particular including but not limited to houses, buildings, or other infrastructure.

7. The method (20) according to any one of claims 1 to 5, wherein the danger zone (10) is dynamically determined based at least in part on the presence of personnel or movable assets in the vicinity of the wind turbine (1).

8. The method according to any one of claims 1 to 7, wherein the danger zone (10) is established based on a combination of fixed geographical features and real-time monitoring of human activity or equipment in the surroundings of the wind turbine (1) .

9. The method (20) according to any one of claims 1 to 8, wherein adjusting the rotor (9) yaw orientation (W) away from the danger zone (10) comprises reorienting to a yaw orientation angle or to a range of angles associated with the safe zone (12), wherein the safe zone (12) is defined as an area where falling ice can safely occur.

10. The method (20) according to claim 1 or 9, wherein the safe zone is defined as an area where ice falling from the rotor blades (2,3,4) does not pose a risk to personnel, equipment, and/or infrastructure.

11. The method (20) according to any one of claims 1 to 10, further comprising maintaining the wind turbine (1) in a yaw orientation away from the danger zone (10) or in an orientation that reduces the identified risk of falling ice until the rotor blades (2,3,4) the identified risk is mitigated, in particular until when the rotor blades (2,3,4) are substantially deiced.

12. The method (20) according to any one of claims 1 to 11, wherein the first rotor blade (2) is the rotor blade positioned at the highest point of the wind rotor (9) in its rotational plane, in particular such that in a wind rotor consisting of three blades (2,3,4), if two rotor blades (2,3,4) are positioned at approximately the same height, forming a 'Y' shape, the first rotor blade (2) refers to either of these two upper rotor blades.

13. A control system for operating a wind turbine (1) under potential icing conditions for reducing vibrations during idling or standstill operation, wherein the control system is adapted to carry out the method according to any one of claims 1 to 12.

14. A wind turbine (1), comprising: at least two rotor blades (2,3,4), said blades (2,3,4) attached to a hub (5), a wind rotor (9) mounted to a nacelle (6) which is in turn mounted on a tower (7), wherein the wind turbine (1) further comprises an electrical generator operationally connected to the wind rotor (9) for converting wind energy into electrical energy, a pitch-position adjustment unit for adjusting the blade (2,3,4) pitch angle (P), and a yawing mechanism for rotating the wind rotor (9) through a yaw axis,
wherein the wind turbine (1) is **characterized in that** it comprises the control system of claim 13.

15. Method for upgrading an existing wind turbine (1), the wind turbine (1) comprising at least two rotor blades (2,3,4), said blades (2,3,4) attached to a hub (5), a wind rotor (9) mounted to a nacelle (6) which is in turn mounted on a tower (7), further comprising an electrical generator operationally connected to the wind rotor (9) for converting wind energy into electrical energy, the wind turbine (1) comprising a pitch-position adjustment unit for adjusting the blade (2,3,4) pitch angle (P), and a yawing mechanism for rotating the rotor through a yaw axis, the method comprising providing and implementing a control system according to claim 13.
